# EUROPEAN PATENT APPLICATION

(11) **EP 2 709 248 A2**
(43) Date of publication of application: **19.03.2014**
(21) Application number: 13183752.8
(22) Date of filing: 10.09.2013
(51) Int. Cl.: H02K 21/24, H02K 1/27

(54) **Axial gap type electric rotating machine, electric wheelchair and electric bicycle**

(30) Priority: 14.09.2012 JP 2012203269
(71) Applicant: Yamaha Hatsudoki Kabushiki Kaisha, Iwata-shi, Shizuoka 438-8501 (JP)
(72) Inventor: Nishikawa, Takahiro, Iwata-shi, Shizuoka 438-8501 (JP); Hino, Haruyoshi, Iwata-shi, Shizuoka 438-8501 (JP)
(74) Representative: Grünecker, Kinkeldey, Stockmair & Schwanhäusser

(57) **Abstract**

An axial gap type electric rotating machine includes a rotor arranged to rotate about an axis of rotation, and a stator arranged so as to face the rotor with a predetermined gap in an axial direction of the axis of rotation. The rotor includes a back yoke and an annular rare earth bonded magnet made of a circumferentially continuous member fixed to the back yoke. The magnet is magnetized so that an N-pole and an S-pole of magnetic poles are arranged alternately in a circumferential direction, and includes cutout portions formed between adjacent magnetic poles. The stator includes a plurality of tooth portions arranged along a circumferential direction so as to face the magnet and a winding wound on the tooth portions. Each tooth portion has a pair of side protruded portions each formed at a tip end portion facing the magnet so as to extend in the circumferential direction.

## Description

The present invention relates to an axial gap type electric rotating machine, preferably used as an electric motor for an electric wheelchair (power-assisted wheelchair) or an electric bicycle (power-assisted bicycle), having a rotor arranged to rotate about an axis of rotation and a stator arranged so as to face the rotor with a gap therebetween in an axial direction of the axis of rotation.

Conventionally, as an axial gap type electric rotating machine used as an electric motor for, e.g., an electric wheelchair or an electric bicycle, an axial gap type electric rotating machine equipped with a rotor arranged to rotate about an axis of rotation and a stator arranged to face the rotor with a gap therebetween in an axial direction of the axis of rotation has been widely used. This rotor is provided with a permanent magnet fixed to a stator facing face of a disc-shaped back yoke in a manner such that an N-pole and an S-pole of magnetic poles are arranged alternately in a circumferential direction of the stator facing face of the disc-shaped back yoke. As such a permanent magnet, a so-called bonded magnet in which crushed magnet pieces such as crushed ferrite magnet pieces are kneaded into rubber or plastic is well known. An axial gap type electric rotating machine equipped with a rotor including such a bonded magnet is widely used.

Meanwhile, in an electric wheelchair and/or an electric bicycle equipped with an electric motor of this kind of axial gap type electric rotating machine, there is an increasing demand for cost reduction and/or downsizing of an electric rotating machine by decreasing the used amount of magnet material while maintaining the basic performance of the electric rotating machine (e.g., torque, reduction of the induced voltage distortion rate)(see, e.g., International Patent Publication No. WO2004/017489).

Under the technical background mentioned above, it was attempted by the present inventors to use a bonded magnet made of a rare earth magnet such as a neodymium magnet for the permanent magnet constituting the rotor, which generates strong magnetic force as compared with a conventional ferrite magnet. This type of bonded magnet is, in comparison to a sintered magnet, high in degree of freedom of molding, excellent in dimensional accuracy, and excellent in mass production. Therefore, the present inventors thought that a circumferentially continued integral magnet excellent in dimensional accuracy and strong in magnetic force can be provided by employing a rare earth bonded magnet, magnetizing the magnet material so that an N-pole and an S-pole are arranged alternately in the circumferential direction, and forming cutout portions between adjacent magnetic poles.

Since the magnet is strong in magnetic force, the present inventors thought that the dimension of the magnet in the axial direction can be reduced by reducing the thickness of the magnet itself, which in turn can reduce the dimension of the motor in the axial direction. Furthermore, by forming cutout portions between the magnetic poles, the used amount of magnet material can be reduced, which in turn can attain the cost reduction while maintaining the motor efficiency.

However, the inventor found the facts that, when using a rotor including a rare earth bonded magnet as described above, although the dimension of the motor in the axial direction can be reduced and the cost reduction can be attained by reducing the used amount of magnet material, the efficiency as an electric rotating machine deteriorates.

The present invention has been developed in view of the above-mentioned and/or other problems in the related art. The present invention can significantly improve upon existing methods and/or apparatuses,

Among other advantages, the present invention can provide an axial gap type electric rotating machine capable of attaining cost reduction and improving motor efficiency while employing a rare earth bonded magnet as a permanent magnet of the rotor.

Other objects and advantages of the present invention will be apparent from the following description.

According to the present invention, an axial gap type electric rotating machine is provided with a rotor arranged to rotate about an axis of rotation and a stator arranged so as to face the rotor with a predetermined gap therebetween in an axial direction of the axis of rotation. The rotor is equipped with a disc-shaped back yoke and an annular rare earth bonded magnet made of a circumferentially continuous member fixed to a stator facing face of the back yoke. The annular rare earth bonded magnet is magnetized so that an N-pole and an S-pole of magnetic poles are arranged alternately in a circumferential direction, and includes a cutout portion formed between the adjacent magnetic poles. The stator is equipped with a plurality of tooth portions arranged along the circumferential direction so as to face the bonded magnet and a winding wound on the tooth portions. Each tooth portion constituting the stator has a pair of side protruded portions formed at a tip end portion of the tooth portion facing the rare earth bonded magnet so as to extend in the circumferential direction.

In the aforementioned axial gap type electric rotating machine, since the cutout portion is formed, the used amount of magnet material which is ineffective for a motor output can be reduced, which enables reduction of production cost and reduction of cogging torque. Also, each tooth portion constituting the stator has a pair of side protruded portions each formed at the tip end portion of the tooth portion facing the rare earth bonded magnet so as to extend in the circumferential direction. This can reduce cogging torque, as well as iron loss to be generated in each tooth portion of the stator and the back yoke of the rotor, which in turn can improve the motor efficiency.

In a preferred embodiment of the axial gap type electric rotating machine, it can be configured such that an anisotropic neodymium bonded magnet is used as the rare earth bonded magnet.

In a preferred embodiment of the axial gap type electric rotating machine, in the bonded magnet, it can be configured such that the cutout portion is formed in either the inner peripheral edge or the outer peripheral edge between the adjacent magnetic poles to reduce the portion ineffective for the motor output to thereby attain cost reduction by reducing the used amount of magnet material.

In a preferred embodiment of the axial gap type electric rotating machine, it can be configured such that the cutout portion is formed in both the inner peripheral edge and the outer peripheral edge between the adjacent magnetic poles.

In a preferred embodiment of the axial gap type electric rotating machine, it can be configured such that the cutout portion formed in the outer peripheral edge is larger in circumferential width than the cutout portion formed in the inner peripheral edge.

In a preferred embodiment of the axial gap type electric rotating machine, it is preferable that each tooth portion includes a body portion, a flat portion formed on a tip end portion of the body portion and having a predetermined width, and side protruded portions each protruded from a circumferential side of the flat portion and having an upper surface which extends from the flat portion so as to gradually increase a distance between the upper surface and the rotor

In a preferred embodiment of the axial gap type electric rotating machine, it can be configured such that the upper surface of the side protruded portion of each tooth portion is formed into an inclined shape or a stepped shape.

It is preferable that the stator is resin-molded with an exception of the flat portion.

According to a preferred embodiment of the present invention, an electric wheelchair is equipped with the axial gap type electric rotating machine as described above.

According to a preferred embodiment of the present invention, an electric bicycle is equipped with the axial gap type electric rotating machine as described above.

The preferred embodiments of the present invention are shown by way of example, and not limitation, in the accompanying figures, in which:

Fig. 1 is a vertical cross-sectional view schematically showing a structure of an axial gap type electric rotating machine according to a first embodiment of the present invention;

Fig. 2 is a plan view showing a rotor of the electric rotating machine as seen from a magnet side;

Fig. 3 is a plan view showing a stator used in the electric rotating machine in a state before resin-molding;

Fig. 4 is a plan view showing the stator shown in Fig. 3 in a state after resin-molding.

Fig. 5 is a cross-sectional view showing a tooth portion constituting the stator of the electric rotating machine, in which the tooth portion is cut along the circumferential direction;

Fig. 6 is a cross-sectional view showing a tooth portion according to a modified embodiment;

Fig. 7 is an explanatory view showing an electric wheelchair using the axial gap type electric rotating machine according to the present invention; and

Fig. 8 is an explanatory view showing an electric bicycle using the axial gap type electric rotating machine according to the present invention.

In the following paragraphs, some preferred embodiments of the present invention will be described with reference to the attached drawings by way of example and not limitation. It should be understood based on this disclosure that various other modifications can be made by those in the art based on these illustrated embodiments.

Hereinafter, some preferred embodiments of an axial gap type electric rotating machine according to the present invention will be explained. Initially, the development process of the present invention will be explained. As already explained, for a permanent magnet constituting a rotor, it was attempted to consider using a bonded magnet made of a rare earth magnet, such as, e.g., a neodymium magnet, that generates strong magnetic force in comparison to a conventional ferrite magnet. This type of bonded magnet allows more freedom in molding, and is excellent in dimensional accuracy and mass productivity as compared with a sintered magnet.

Therefore, the present inventors initially thought as follows. By using a rare earth bonded magnet, it becomes possible to provide a circumferentially continuous magnet having excellent dimensional accuracy and strong magnetic force by magnetizing the magnet material so as to arrange an N-pole and an S-pole alternately in the circumferential direction and forming a cutout portion between the adjacent magnetic poles. Since the magnetic force is strong, the inventors also thought that the magnet itself can be reduced in thickness, the dimension of the motor in the axial direction can be reduced, and the used amount of magnet material can be reduced by forming the cutout portion between the adjacent magnetic poles, to thereby attain the cost reduction while maintaining the motor efficiency.

However, the present inventors found the following facts. That is, when a rotor using a rare earth bonded magnet as mentioned above is employed, the dimension of the magnet in the axial direction can be reduced by reducing the thickness of the magnet. As a result, the dimension of the motor in the axial direction can be reduced, and the cost reduction can be attained by reducing the used amount of magnet material. However, the motor efficiency deteriorates.

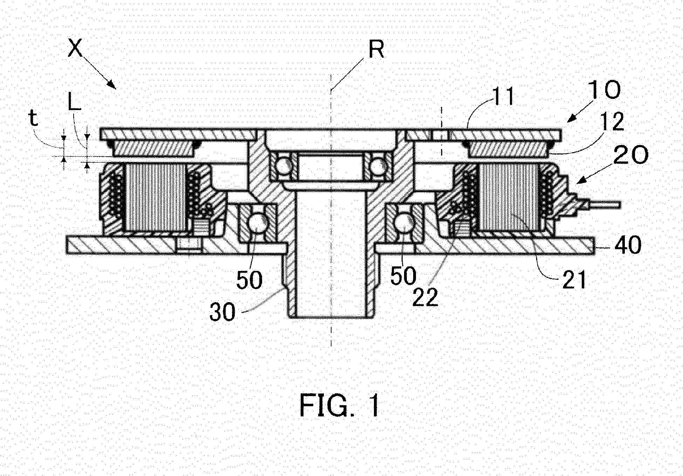

Under the circumstances, after examining the reasons for the deterioration of the motor efficiency, the present inventors revealed the following findings. That is, by using a rare earth bonded magnet such as a neodymium bonded magnet that generates strong magnetic force, the thickness of the magnet can be reduced and therefore the dimension of the magnet in the axial direction can be reduced, but there arises new problems. That is, as shown in Fig. 1, the distance L between the tip end of the tooth portion 21 of the stator 20 and the back yoke 11 of the rotor 10 is reduced. As a result, the magnetic resistance therebetween decreases, which in turn increases fluctuation of the permeance modulus and eddy-currents to be generated in the back yoke 11 of the rotor 10 due to the change in magnetic flux. For that reason, joule loss increases, which in turn deteriorates the motor efficiency. Thus, the present inventors found the facts that both the cost reduction and the motor efficiency improvement cannot be achieved at the same time by merely replacing a permanent magnet of a rotor in a conventional axial gap type electric rotating machine with a rare earth bonded magnet such as a neodymium bonded magnet strong in magnetic force and easy in molding.

Based on these findings, after conducting further experiments and researches, the present inventors revealed that both the cost reduction and the motor efficiency improvement can be achieved at the same time by adequately designing the shape of the magnet on the rotor side and the shape of the tooth portion on the stator side, and have completed the present invention.

Hereinafter, an axial gap type electric rotating machine according to one embodiment of the present invention will be explained. The electric rotating machine X according to this embodiment is, as shown in Fig. 1, equipped with a rotor 10 and a stator 20 arranged so as to face the rotor 10 with a predetermined gap in an axial direction of the axis of rotation R.

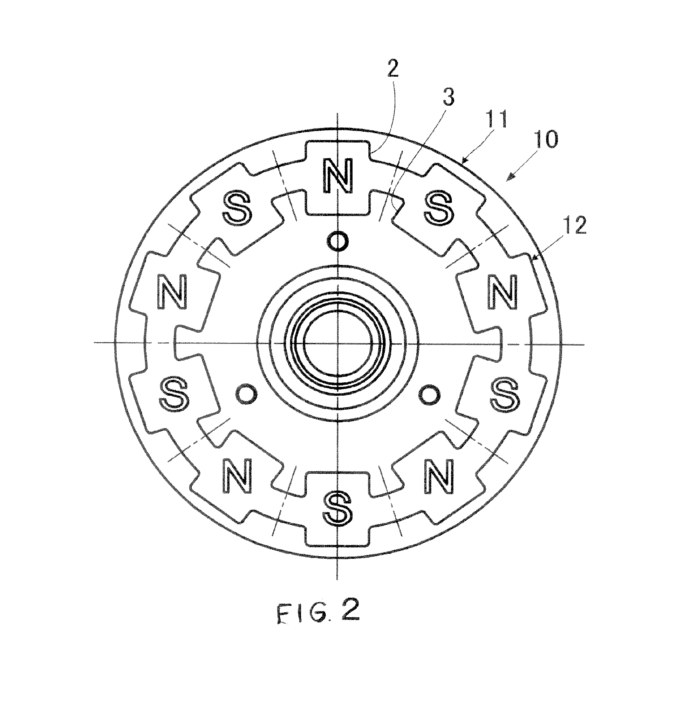

As shown in Figs. 1 and 2, the rotor 10 includes a back yoke 11 made of a disc-shaped iron and an annular-shaped rare earth bonded magnet 12. The rare earth bonded magnet 12 is made of a circumferentially continuous member fixed to the stator facing face of the back yoke 11 and magnetized so that an N-pole and an S-pole of the magnetic poles are arranged alternately in a circumferential direction, Cutout portions 2 and 3 are formed between the adjacent magnetic poles.

As the bonded magnet 12, it is possible to use an isotropic neodymium bonded magnet. However, it is preferable to use an anisotropic neodymium bonded magnet having a stronger magnetic force, As shown in Fig. 2, in the bonded magnet 12 formed into an annular shape, an outer cutout portion 2 is formed so as to extend toward the radially inward side from the outer peripheral edge between the adjacent S-pole and N-pole, and an inner cutout portion 3 is formed so as to extend toward the radially outward side from the inner peripheral edge between the adjacent S-pope and N-pole. The outer cutout portion 2 and the inner cutout portion 3 are formed in a radially aligned manner.

The main reason for forming these cutout portions 2 and 3 is to reduce the portion between the magnetic poles, i.e., the S-pole and the N-pole, that are ineffective for motor output, as much as possible to reduce the constituent material of the magnet to thereby attain the cost reduction. In the present invention, it can be configured such that the cutout portion 2 or 3 is formed only in either the inner peripheral edge or the outer peripheral edge. However, from the view point of reducing the magnet material as much as possible, as shown in this embodiment, it is preferable to form the cutout portions 2 and 3 in both the inner peripheral edge and the outer peripheral edge. As shown in Fig. 2, the cutout portion 2 formed in the outer peripheral edge is set to be larger in circumferential width than the cutout portion 3 formed in the inner peripheral edge.

The rotor 10 in which the bonded magnet 12 is attached to the back yoke 11 is fixed to one end portion (upper end portion in Fig. 1) of the axial shaft 30 rotatable about the axis of rotation R.

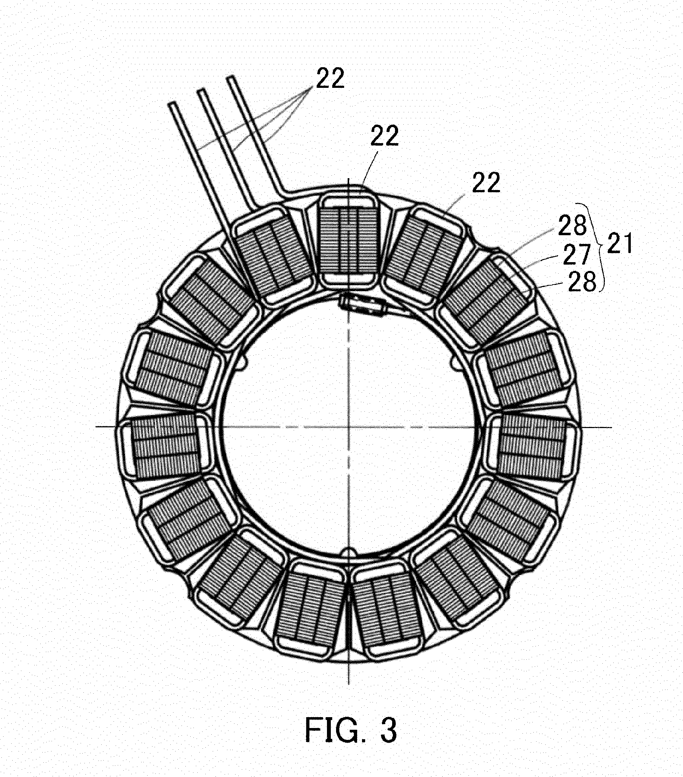

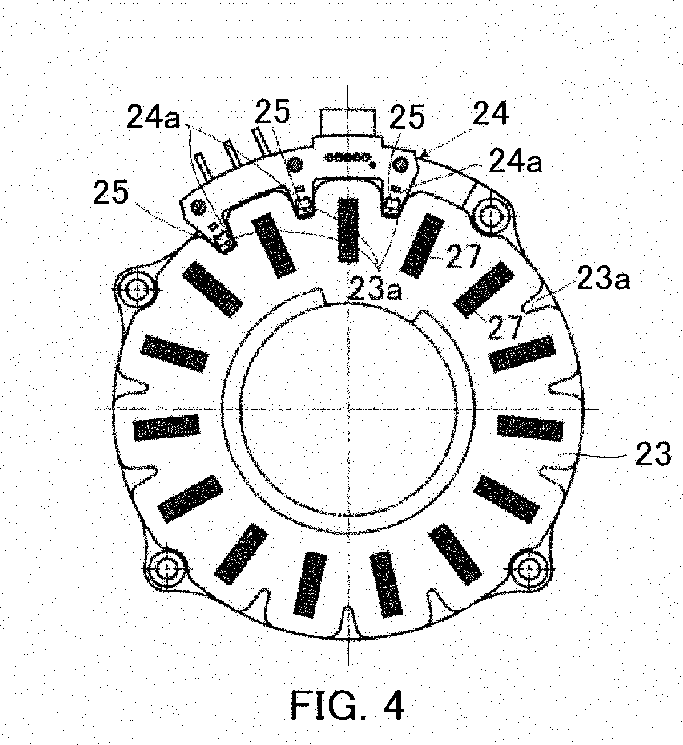

On the other hand, as shown in Fig. 3, the stator 20 includes a plurality of tooth portions 21 arranged at equal intervals along the circumferential direction so as to face the bonded magnet 12 and windings 22 wound on the tooth portions 21. The tooth portions 21 to which the windings 22 are wound are, as shown in Fig. 4, molded with resin and formed into a donut shape. That is, the stator 20 is integrally solidified and formed with a donut shaped resin compact 23. In Fig. 4, the reference numeral "24" denotes a sensor attachment member including a finger portion 24a to be engaged with a concave portion 23a formed to extend toward a radially inner side on the outer peripheral edge portion of the donut shaped resin compact 23. Each finger portion 24a is fixedly engaged with corresponding concave portion 23a of the resin compact 23, and configured to detect the rotational position of the rotor 10 with the sensor element 25 provided in the finger portion 24a.

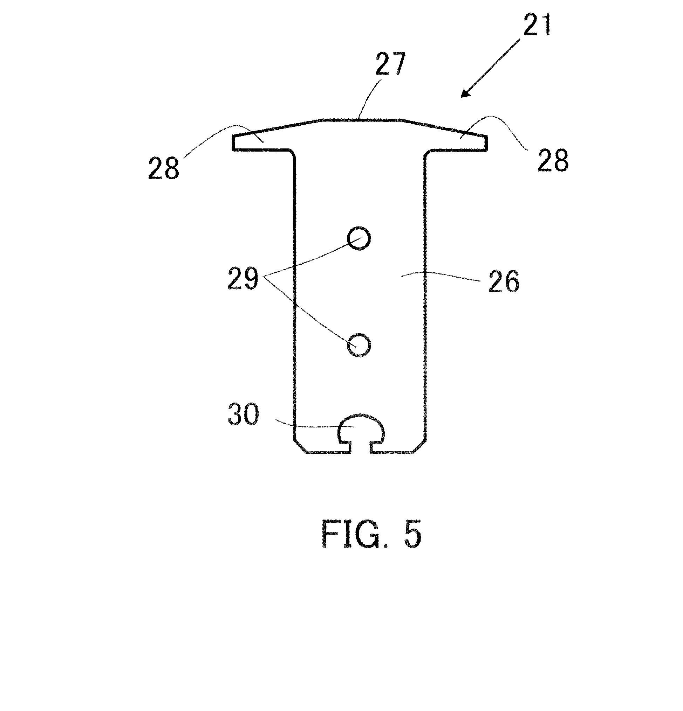

Each tooth portion 21 is formed by laminating thin silicon steel plates to restrain occurrence of eddy-currents. As shown in Fig. 5, each tooth portion 21 includes a body portion 26 formed into a vertically elongated rectangular shape as seen from the side, a flat portion 27 having a predetermined width and formed at the tip end portion of the body portion 26, which is a magnet facing face of the stator 20, and side protruded portions 28 and 28 each protruded from the circumferential side of the flat portion 27 and having an upper surface which extends from the flat portion 27 so as to gradually increase a distance between the upper surface and the rotor 10. Each tooth portion 21 is formed by laminating a plurality of thin silicon steel plates having the shape as shown in Fig. 5 along a radial direction of the axis of rotation R. In Fig. 5, the reference numeral "29" and "30" denote tooth portion fixing holes.

Each of these tooth portions 21 is, as shown in Fig. 4, resin-molded in such a manner that only the upper surface of the flat portion 27 is exposed.

By forming the side protruded portions 28 and 28 on the tip end portion side of each tooth portion 21 so as to extend in the circumferential direction as explained above, an area where no iron portion exists in the circumferential direction decreases along the entire periphery of the stator 20 when viewed from the rotor 10. This reduces eddy-currents to be generated in the back yoke 11 of the rotor 10 due to changes in magnetic flux, thereby improving the motor efficiency. In addition, the increase in cogging torque caused by the use of a strong magnet can be reduced by the presence of side protruded portions 28 and 28 formed on the tooth portion 21, which in turn can improve the motor efficiency by the synergetic effect with the aforementioned effect.

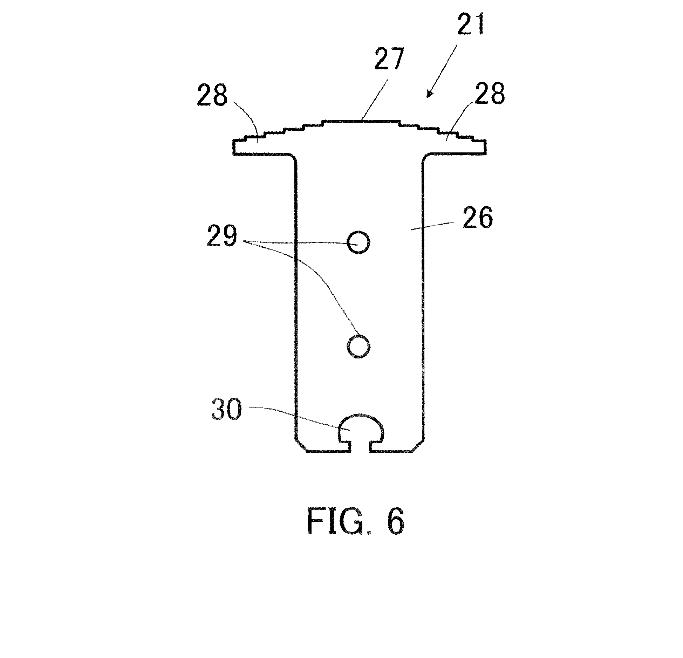

Therefore, the side protruded portion 28 formed on each tooth portion 21 is not specifically limited in the present invention as long as it is formed at the tip end portion facing the bonded magnet 12 so as to extend in the circumferential direction. For example, as shown in Fig. 5, it can be configured such that the side protruded portions 28 and 28 extend from both circumferential sides of the flat portion 27 having a predetermined width and formed on the tip end portion of the tooth portion 21 in such a manner that the upper surface of the side protruded portion 28 inclines downwardly to extend from the flat portion 27 so as to gradually increase a distance between the upper surface and the rotor 10, Alternatively, as shown in Fig. 6, it can be configured such that the upper surface of the side protruded portion 28 is formed into a step-shape. The tooth portion 21 shown in Fig. 6 is the same as that of the embodiment shown in Fig. 5, and therefore the explanation will be omitted by allotting the same symbols.

Each tooth portion 21 resin-molded as described above is fixed to the fixing substrate 40 as shown in Fig. 1 and connected to the axial shaft 30 via the bearing portion 50 in a relatively rotatable manner. Accordingly, it is configured such that the rotor 10 rotates relative to the stator 20 when an electric current is passed through the windings 22 of the stator 20.

As explained above, the present invention is **characterized in that**, as the permanent magnet constituting the rotor 10, a rare earth bonded magnet 12 having cutout portions 2 and 3 is employed, and that, as the tooth portion 21 constituting the stator, a tooth portion 21 having a pair of side protruded portions 28 and 28 each extending in the circumferential direction is employed. In other words, the features of the present invention reside in the combination of the specific shape of the rare earth bonded magnet 12 of the rotor 10 and the specific shape of the tooth portion 21 of the stator 20 (i.e., the shape in which a pair of side protruded portions 28 and 28 each extending in the circumferential direction is formed at the tip end of the tooth portion). In detail, a rare earth bonded magnet easy in molding and strong in magnetic force is employed. The rare earth bonded magnet is formed into an annular shape and cutout portions 2 and 3 are formed between adjacent magnetic poles while securing strong magnetic force and attaining the cost reduction by reducing the used amount of magnet material. On the other hand, the side protruded portions 28 and 28 are formed on the tooth portion 21. This reduces cogging torque to be increased due to the strong magnetic force and also reduces iron loss by restraining the increase of eddy-currents to be generated in the back yoke 11 of the rotor 10. Thus, the motor efficiency is improved.

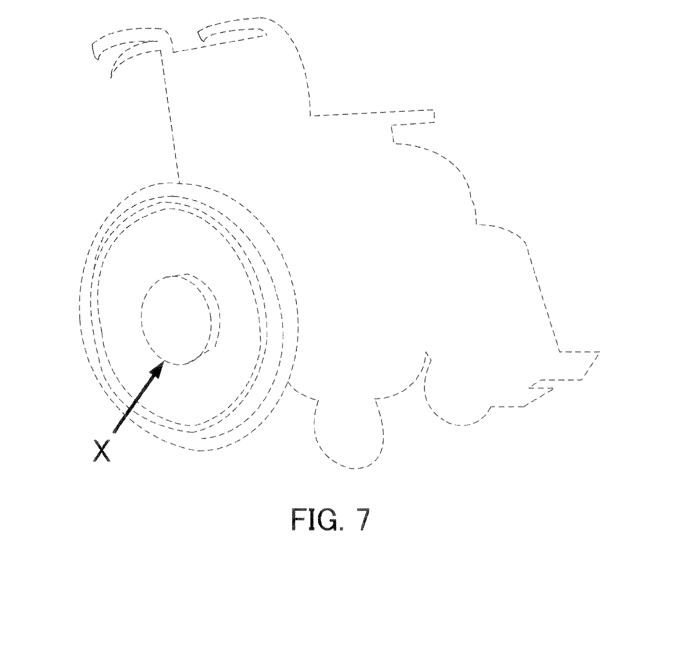

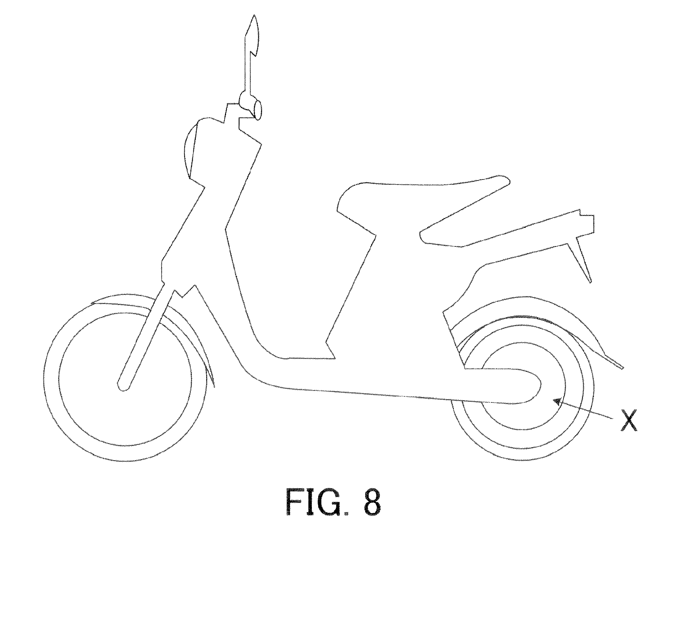

The application of the axial gap type electric rotating machine according to the present invention is not especially limited. The axial gap type electric rotating machine can be preferably used as, for example, a driving motor X for an electric wheelchair as shown in Fig. 7 or a driving motor X for an electric bicycle as shown in Fig. 8.

It should be understood that the terms and expressions used herein are used for explanation and have no intention to be used to construe in a limited manner, do not eliminate any equivalents of features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

The axial gap type electric rotating machine according to the present invention can be used as an electric driving source for, e.g., various electric vehicles including electric wheelchairs, electric bicycles, and various electric machines,

## Claims

1. An axial gap type electric rotating machine comprising a rotor arranged to rotate about an axis of rotation, and a stator arranged so as to face the rotor with a predetermined gap therebetween in an axial direction of the axis of rotation, **characterized in that**
the rotor includes a disc-shaped back yoke and an annular rare earth bonded magnet made of a circumferentially continuous member fixed to a stator facing face of the back yoke, wherein the annular rare earth bonded magnet is magnetized so that an N-pole and an S-pole of magnetic poles are arranged alternately in a circumferential direction, and includes a cutout portion formed between adjacent magnetic poles,
the stator includes a plurality of tooth portions arranged along the circumferential direction so as to face the rare earth bonded magnet and a winding wound on the tooth portions, and
each tooth portion constituting the stator includes a pair of side protruded partians formed at a tip end portion of each tooth portion facing the rare earth bonded magnet so as to extend in the circumferential direction.

2. The axial gap type electric rotating machine as recited in claim 1, wherein the rare earth bonded magnet is an anisotropic neodymium bonded magnet.

3. The axial gap type electric rotating machine as recited in claim 1 or 2,
wherein the bonded magnet includes the cutout portion formed in at least one of an inner peripheral edge of the bonded magnet and an outer peripheral edge of the bonded magnet between the adjacent magnetic poles.

4. The axial gap type electric rotating machine as recited in claim 1 or 2,
wherein the bonded magnet includes the cutout portion formed in both an inner peripheral edge of the bonded magnet and an outer peripheral edge of the bonded magnet between the adjacent magnetic pole.

5. The axial gap type electric rotating machine as recited in claim 4, wherein the cutout portion formed in the outer peripheral edge is set to be larger in circumferential width than the cutout portion formed in the inner peripheral edge.

6. The axial gal type electric rotating machine as recited in any one of claims 1 to 5, wherein each tooth portion includes a body portion, a flat portion formed on a tip end portion of the body portion and having a predetermined width, and the side protruded portions each protrude from a circumferential side of the flat portion and have an upper surface which extends from the flat portion so as to gradually increase a distance between the upper surface and the rotor.

7. The axial gap type electric rotating machine as recited in claim 6, wherein the upper surface of the side protruded portion of each tooth portion is formed into an inclined surface.

8. The axial gap type electric rotating machine as recited in claim 6, wherein the upper surface of the side protruded portion of each tooth portion is formed into a stepped surface.

9. The axial gap type electric rotating machine as recited in any one of claims 6 to 8, wherein the stator is resin-molded with an exception of the flat portion.

10. The axial gap type electric rotating machine as recited in claim 1, wherein:
the rare earth bonded magnet is an anisotropic neodymium bonded magnet;
the neodymium bonded magnet includes the cutout portion formed in both inner and outer peripheral edges of the neodymium bonded magnet between the magnetic poles; and
each tooth portion includes a body portion, a flat portion formed on a tip end portion of the body portion and having a predetermined width, and the side protruded portions each extended from a circumference side of the flat portion and formed to have an upper surface inclined to extend from the flat portion so as to gradually increase a distance between the upper surface and the rotor.

11. An electric wheelchair equipped with the axial gap type electric rotating machine as recited in any one of claims 1 to 10.

12. An electric bicycle equipped with the axial gap type electric rotating machine as recited in any one of claims 1 to 10.
